Europäisches Patentamt

European Patent Office

Office européen des brevets

(11) Publication number: **0 320 543**
**A1**

## EUROPEAN PATENT APPLICATION

(21) Application number: 87311055.5

(51) Int. Cl.⁴: **B64C 25/60**

(22) Date of filing: 15.12.87

(43) Date of publication of application:
21.06.89 Bulletin 89/25

(84) Designated Contracting States:
BE DE ES FR GB GR IT LU NL

(71) Applicant: **Pneumo Abex Corporation**
**4800 Prudential Tower**
**Boston Massachusetts 01299(US)**

(72) Inventor: **Hrusch, Louis C.**
**13461 Green Drive**
**Chesterland§Ohio 44026(US)**

(74) Representative: **Cook, Anthony John et al**
**D. YOUNG & CO. 10, Staple Inn**
**London, WC1V 7RD(GB)**

(54) Landing gear mechanism including bypass valve assembly for reducing damping loads during taxiing.

(57) Landing gear mechanism includes a restrictor assembly (6) containing a main orifice (15) for controlling the rate of instroke of the landing gear mechanism during landing and a taxi instroke bypass valve assembly (20) which provides for increased flow of hydraulic fluid within the landing gear mechanism whenever the landing gear mechanism engages a bump during taxiing to reduce the damping loads that would otherwise occur if all of the hydraulic fluid were required to flow through the main orifice (15). The taxi instroke bypass valve assembly (20) includes a slide member (22) axially movable relative to the restrictor assembly (6) for opening and closing one or more bypass orifices (21) in the restrictor assembly (6). The slide member (22) is held in the closed position whenever the landing gear mechanism is in a specified stroke range from fully extended by a secondary piston (28) which is acted upon by the pressure in a precharged secondary chamber (30) urging the secondary piston (22) into engagement with a probe (23) connected to the slide member (22). At some point in the strut stroke, the pressure within the upper piston chamber (19) of the landing gear mechanism will rise to that of the precharged secondary chamber (30), whereby the secondary piston (28) will be stroked along with the main strut piston (5) and the slide member (22) will move to the open position allowing fluid to bypass the main orifice (15), thereby reducing the damping loads as the landing gear mechanism negotiates bumps during taxiing.

# LANDING GEAR MECHANISM INCLUDING BYPASS VALVE ASSEMBLY FOR REDUCING DAMPING LOADS DURING TAXIING

This invention relates generally to a landing gear mechanism which includes a bypass valve assembly for substantially reducing or eliminating high damping loads as the landing gear mechanism negotiates bumps during taxiing. Such a landing gear mechanism is especially designed for high performance aircraft, to permit such aircraft to operate on relatively rough runways.

Typically, landing gears for high performance aircraft such as operated by the military are not designed to operate on rough runways made rough, for example, as a result of temporary repairs to bomb damaged areas and the like.

It is possible to make a landing gear that is effective at heavy take-off weight and still provide the required shock strut stroke during landing to absorb the required amount of landing energy to prevent damage to the landing gear during landing on rough runways by providing the landing gear with different low spring rate load ranges as described in applicant's own U.S. Patent No. 4,552,324, dated November 12, 1985.

The landing gear of such patent can also be made to discriminate between shock strut extension during normal ground roll and extension as the strut tire follows a sudden recess during forward travel, preventing cavitation in the lower piston chamber of the landing gear as the landing gear extends, and providing for piston rebound damping as the piston approaches the end of its stroke during full extension.

In addition, provision can be made in the landing gear of such patent for substantially reducing or eliminating high damping loads as the landing gear negotiate bumps. Briefly, this is accomplished by the opening of a taxi instroke bypass valve as soon as the landing energy stroke is complete to allow fluid to pass more freely from the lower piston chamber to the upper piston chamber, bypassing the primary flow orifice.

The landing gear mechanism of the present invention may include one or more of the various features disclosed in such patent. However, the present landing gear mechanism includes a novel bypass valve assembly for reducing or substantially eliminating the high damping loads that might otherwise take place during taxiing as the landing gear negotiates bumps which is better suited to being packaged into a smaller space than the corresponding mechanism of such patent.

According to the present invention, there is provided a landing gear mechanism generally of the type described but which includes a simplified bypass valve assembly for substantially reducing or eliminating high damping loads as the landing gear negotiates bumps during taxiing.

According to the present invention in one aspect, there is provided a landing gear mechanism for an aircraft, comprising a main cylinder, a main strut piston axially movable within said main cylinder, a restrictor member contained within said cylinder and defining with said cylinder and piston upper and lower chambers, said restrictor member having an orifice therethrough for controlling the flow of hydraulic fluid from said lower chamber to said upper chamber during landing, and a bypass valve providing for increased flow of hydraulic fluid from said lower chamber to said upper chamber whenever said landing gear mechanism engages a bump during taxiing to reduce the damping loads that would otherwise occur if all of such hydraulic fluid were required to flow through said orifice, said bypass valve comprising a bypass around said orifice, a slide member mounted for axial movement relative to said restrictor member between open and closed positions for respectively opening and closing said bypass passage, and means for keeping said slide member in the closed position until after landing has taken place and the pressure in said upper chamber has risen to a predetermined level, said means for keeping said slide member in the closed position until after landing has taken place comprising a secondary piston having a first surface area which is continually acted upon by a secondary pressure source of a predetermined magnitude urging said secondary piston toward said slide member.

The bypass valve assembly can be packaged into a small space within the envelope of a standard landing gear, such as the nose gear, of a high performance military aircraft.

Further in accordance with a feature of the invention, the bypass valve assembly may be incorporated within a restrictor assembly which also controls the rate of instroke of the landing gear mechanism during landing of the aircraft.

The pressure actuated secondary air stage of a landing gear mechanism may be utilized to control the opening and closing of the bypass valve assembly.

The restrictor assembly of the landing gear mechanism includes a bypass valve assembly having a slide member which is axially movable relative to the restrictor assembly for opening and closing one or more bypass orifices in the restrictor assembly. The slide member is held in the closed position whenever the landing gear mechanism is in a specified stroke range from fully extended by a secondary piston which is acted upon by the pressure in a precharged secondary chamber urging the secondary piston into engagement with a probe connected to the slide member. However, at a certain point during the instroke of the main piston after the landing energy stroke is complete, the upper piston chamber pressure within the landing gear mechanism will rise to that of the precharged secondary chamber, whereby the secondary piston will be stroked along with the main piston to provide a softer spring rate during taxiing. As the upper piston chamber pressure increases, the secondary piston will be stroked away from the restrictor assembly and out of engagement with the probe, whereupon the slide member will move to the open position allowing fluid to bypass the main orifice, thereby greatly reducing or eliminating high damping loads that might otherwise take place as the landing gear mechanism negotiates bumps during taxiing.

An embodiment of the invention will now be described, by way of an example, with reference to the accompanying drawings, in which:

Figure 1 is a fragmentary longitudinal section through one type of landing gear mechanism embodying the present invention including a preferred form of bypass valve assembly which permits operation on rough runways, such landing gear mechanism being shown fully extended with the bypass valve assembly in the closed position; and

Figure 2 is a fragmentary longitudinal section similar to Figure 1, but showing the landing gear mechanism fully compressed with the bypass valve assembly in the open position.

Referring now in detail to the drawings, there is shown one form of landing gear mechanism 1 in accordance with this invention which generally consists of a main shock strut 2 including an outer main cylinder 3 having a trunnion 4 at its upper or inboard end for connection to the aircraft fuselage in conventional manner. Suitable support struts and drag brace members, not shown, may be provided for supporting the landing gear mechanism in its down position in order to support the aircraft while on the ground and during take-off and landing and for retracting the landing gear mechanism during flight.

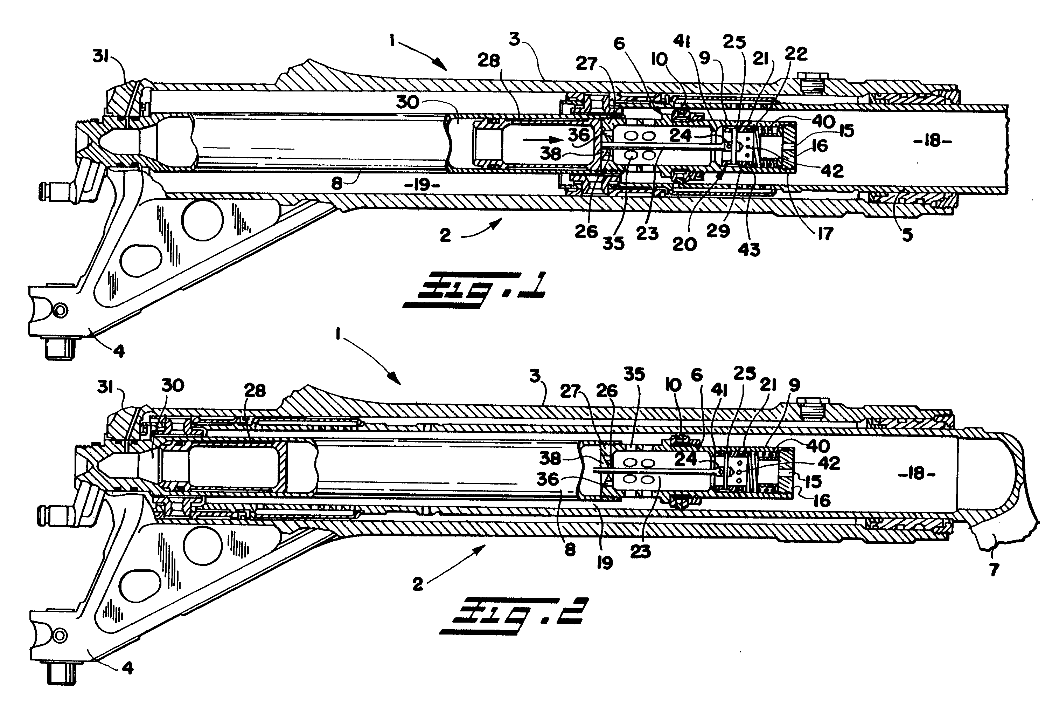

Axially movable within the outer main cylinder 3 is a main strut piston 5 which extends outwardly beyond the outer end of the main cylinder and has a suitable trunnion mount 7 at the outboard end thereof (see Figure 2) for mounting of a wheel and tire assembly thereon (not shown). The main strut piston 5 is generally tubular over its retracted length, to provide for relative sliding movement of a restrictor assembly 6 within the main strut piston.

The restrictor assembly 6 is connected to the inboard end of the outer main cylinder 3 as by means of an orifice support tube 8 extending therebetween.

As shown, the orifice support tube 8 desirably extends a substantial portion of the length of the main cylinder 3, and provides a rigid support for the restrictor assembly 6 which is located coaxially within the main cylinder adjacent the outer end thereof and extends coaxially into the main piston 5. The restrictor assembly includes a tubular sleeve portion 9 which may be threadedly connected at its inner end to the outer end of the orifice support tube 8. Suitably mounted on the outer diameter (O.D) of the restrictor sleeve 9 intermediate the ends thereof is a ring seal 10 having sliding sealed engagement with the inner diameter (I.D.) of the main piston 5 to prevent fluid flow therebetween.

One or more main orifices are provided in the restrictor assembly 6. In the embodiment shown, a single main orifice 15 extends through the axial center of a nut 16 threadedly received in a counterbore 17 in the outer end of the restrictor sleeve 9 to provide for restricted flow through the restrictor assembly from the lower piston chamber 18 to the upper piston chamber 19 on opposite sides of the seal ring 10 during the compression stroke of the landing gear upon landing of the aircraft. Such orifice 15 is shown as being a fixed orifice. However, it will be apparent that a variable orifice could be provided in place of the fixed orifice to control the dynamic load stroke curve of the landing gear within certain limits at different strut-stroke positions, as well known in the art.

Incorporated within the restrictor assembly 6 is a taxi instroke bypass valve assembly 20 which opens one or more bypass orifices 21 in the restrictor sleeve 9 during taxiing of the aircraft to allow fluid to pass more freely from the lower piston chamber 18 to the upper piston chamber 19, bypassing the main orifice 15 to greatly reduce or eliminate high damping loads that might otherwise take place as the landing gear negotiates bumps. In the embodiment shown, there are four such bypass orifices 21 uniformly spaced about the circumference of the restrictor sleeve 9.

The bypass orifices 21 are selectively opened and closed in accordance with the axial position of a slide member 22 within the restrictor sleeve 9. A probe 23, suitably connected to the axial inner end of the slide member 22 as by a pair of angularly disposed pins 24,25, extends through a central opening 26 in a radial flange 27 at the axial inner end of the restrictor sleeve. When the landing gear mechanism is fully extended as shown in Figure 1, the probe 23 is engaged by a secondary piston 28 within the orifice support tube 8 urging the slide member 22 to the position shown in Figure 1 in which an external land 29 on the slide member is in overlapping engagement with the bypass orifices 21 blocking flow therethrough. The secondary piston 28 is part of a pressure actuated secondary air stage which assists in providing a softer spring rate for the landing gear mechanism during taxiing as described hereafter.

Between the secondary piston 28 and upper or inboard end of the orifice support tube 8 is a secondary air chamber 30 which is precharged with a desired amount of air pressure through a suitable passage 31 in the inboard end of the main cylinder 3 communicating with the secondary air chamber. When the landing gear mechanism 1 is fully extended as shown in Figure 1, the pressure in the secondary chamber 30, being higher than that in the upper piston chamber 19, urges the secondary piston 28 into seated engagement with the inner end of the restrictor sleeve 9, forcing the probe 23 outwardly to a slight extent, until it is flush with the inner end of the restrictor sleeve 9, to move the land 29 on the slide member 22 into position blocking fluid flow through the bypass orifices 21 as aforesaid. However, fluid is still free to flow from the lower piston chamber 18 through the main orifice 15 at the outer end of the restrictor sleeve 9 on one side of the ring seal 10 into the center of the restrictor sleeve and out through a plurality of radial ports 35 in the restrictor sleeve on the opposite side of the ring seal into the upper piston chamber 19 and vice versa.

During landing, the bypass orifices 21 remain closed, whereby all of the hydraulic fluid must pass from the lower piston chamber 18 to the upper piston chamber 19 through the main orifice 15, giving full orifice landing dynamics to the landing gear mechanism during landing. However, at a certain point during the instroke of the main piston 5, the pressure in the upper piston chamber 19, which also acts on the outer end of the secondary piston 28 through axial passages 36 in the flange 27 at the inner end of the restrictor sleeve 9, will rise to that of the precharged secondary chamber 30, whereby the secondary piston will be stroked along with the main piston, thus providing a softer spring rate for the landing gear mechanism during taxiing. To increase the surface area of the secondary piston 28 exposed to the primary pressure in the upper piston chamber 19 when the secondary piston is fully seated against the restrictor sleeve 9 as shown in Figure 1, the inner face of the restrictor sleeve flange 27 is desirably conically tapered, with the axial passages 36 through such flange communicating with the conical recess 38 formed by the taper.

As the secondary piston 28 is stroked inward (i.e. toward the left as viewed in Figures 1 and 2), a spring 40 acting on the outer end of the slide member 22 urges the slide member axially inwardly into engagement with an internal stop shoulder 41 on the restrictor sleeve 9 to establish communication between the bypass orifices 21 and a plurality of circumferentially spaced, rapidly extending passages 42 in the slide member through an external circumferential groove 43 in the slide member communicating with all of the radial passages. With the bypass orifices 21 open as shown in Figure 2, additional fluid is free to flow from the lower piston chamber 18 through the bypass orifices to the upper piston chamber 19 for sudden compression of the landing gear to reduce the restriction instroke while taxiing on rough runways, for faster instroke of the landing gear mechanism, if necessary.

From the foregoing, it will now be seen that the runway-roughness bypass valve assembly of the present invention provides a very simple and effective means for substantially reducing or eliminating high damping loads as the landing gear mechanism negotiates bumps during taxiing. As disclosed, such bypass valve assembly may be effectively incorporated within the restrictor assembly to simplify the construction of the bypass valve assembly and facilitate packaging of the restrictor assembly and bypass valve assembly into a smaller space within the envelope of a standard landing gear such as the nose gear of a high performance military aircraft. Also, a simplified mechanism is provided for opening and closing the bypass valve during the respective instroke and outstroke movements of the landing gear mechanism.

## Claims

1. A landing gear mechanism for an aircraft, comprising a main cylinder (3), a main strut piston (5) axially movable within said main cylinder (3), a restrictor member (6) contained within said cylinder (3) and defining with said cylinder (3) and piston (5) upper and lower chambers (19, 18), said restrictor member (6) having an orifice (15) therethrough for controlling the rate of flow of hydraulic fluid from said lower chamber (18) to said upper chamber (19) during landing, and a bypass valve (20) providing for increased flow of hydraulic fluid from said lower chamber (18) to said upper chamber (19) whenever said landing gear mechanism engages a bump during taxiing to reduce the damping loads that would otherwise occur if all of such hydraulic fluid were required to flow through said orifice (15), said bypass valve (20) comprising a bypass passage (21) around said orifice (15), a slide member (22) mounted for axial movement relative to said restrictor member (6) between open and closed positions for respectively opening and closing said bypass passage (21), and means (23, 28) for keeping said slide member (22) in the closed position until after landing has taken place and the pressure in said upper chamber (19) has risen to a predetermined level, said means (23, 28) for keeping said slide member (22) in the closed position until after landing has taken place comprising a secondary piston (28) having a first surface area which is continually acted upon by a secondary pressure source of a predetermined magnitude urging said secondary piston (28) toward said slide member (22).

2. The landing gear mechanism of claim 1 further characterized in that said secondary piston (28) has a second surface area which is acted upon by the fluid pressure in said upper chamber (19) urging said secondary piston (28) away from said slide member (22), the force exerted on said secondary piston (28) by said secondary pressure source being greater than the force exerted on said secondary piston (28) by the pressure in said upper chamber (19) to keep said slide member (22) in the closed position when said main strut piston (5) is fully extended.

3. The landing gear mechanism of claim 2 further characterized in that the pressure in said upper chamber (19) rises to the pressure of said secondary source during compression of said landing gear mechanism after landing takes place to move said secondary piston (28) away from said slide member (22), said landing gear mechanism including resilient means (40) for moving said slide member (22) to the open position during movement of said secondary piston (28) away from said slide member (22).

4. The landing gear mechanism of claim 3 further characterized in that said restrictor member (6) comprises a restrictor sleeve (9) which is maintained relatively fixed within said main cylinder (3), said restrictor sleeve (9) extending into said main strut piston (5), said main strut piston (5) being axially movable relative to said restrictor sleeve (9) between fully extended and compressed positions, and a seal (10) between said restrictor sleeve (9) and main strut piston (5) providing a sliding seal therebetween, said restrictor sleeve (9) having said orifice (15) and bypass passage (21) therein, and said slide member (22) being axially slidable within said restrictor sleeve (9) for opening and closing of said bypass passage (21) in said restrictor sleeve (9).

5. The landing gear mechanism of claim 4 further characterized in that said slide member (22) has an external land (29) thereon for blocking fluid flow through said bypass passage (21) when said slide member (22) is in the closed position, and a plurality of radial passages (42) extending through said slide member (22) which communicate with said bypass passage (21) in said restrictor sleeve (9) when said slide member (22) is in the open position.

6. The landing gear mechanism of claim 4 further characterized in that said slide member (22) has a probe (23) extending from said slide member (22) beyond the inner end of said restrictor sleeve (9) for engagement by said secondary piston (28) when the pressure of said secondary pressure source is greater than the pressure in said upper chamber (19) to move said slide member (22) to the closed position.

7. The landing gear mechanism of claim 6 further characterized by an end flange (27) at the inner end of said restrictor sleeve (9), said end flange (27) having a central opening (26) therein through which said probe (23) extends, said orifice (15) providing communication between the interior of said restrictor sleeve (9) and said lower chamber (18) on one side of said seal (10), and a plurality of additional radial passages (35) in said restrictor sleeve (9) providing communication between the interior of said restrictor sleeve (9) and said upper chamber (19) on the opposite side of said seal (10), and axial passages (36) through said end flange (27) of said restrictor sleeve (9) for exposing said second surface area of said secondary piston (28) to the fluid pressure in said upper chamber (19) through said axial and radial passages (35,36) in said restrictor sleeve (9).

8. The landing gear mechanism of claim 7 further characterized in that the side of said end flange (27) facing said secondary piston (28) is conically tapered to provide a conical recess (38) to increase said second surface area of said secondary piston (28) exposed to the presssure in said upper chamber (19) when said secondary piston (28) is fully seated against said end flange (27).>

9. The landing gear mechanism of claim 4 further characterized by an orifice support tube (8) attached to the inner end of said main cylinder (3), said orifice support tube (8) extending within said main cylinder (3) and into the inner end of said main strut piston (5), said restrictor sleeve (9) being attached to the outer end of said orifice support tube (8), and said secondary piston (28) being axially movable within said orifice support tube (8) into and out of engagement with the inner end of said restrictor sleeve (9), and a secondary air chamber (30) within said orifice support tube (8) between the inner end of said main cylinder (3) and said secondary piston (28), and means (31) for precharging said secondary air chamber (30) with a predetermined amount of air pressure that acts on said first surface area of said secondary piston (28) urging said secondary piston (28) toward the inner end of said restrictor sleeve (9).

10. The landing gear mechanism of claim 9 further characterized by a probe (23) extending from said slide member (22) beyond the inner end of said restrictor sleeve (9) for engagement by said secondary piston (28) when said secondary piston (28) is urged into engagement with the inner end of said restrictor sleeve (9) by the pressure in said secondary air chamber (30) to move said slide member (22) to the closed position.

Fig. 1

Fig. 2

EP 0 320 543 A1

**EUROPEAN SEARCH REPORT**

Application Number

EP 87 31 1055

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 595 159 (L.C. HRUSCH) <br> * Column 1, lines 8-13; column 2, lines 9-25; column 3, line 23 - column 5, line 62; figures 1-3,7 * <br> --- | 1,4 | B 64 C 25/60 |
| A | US-A-3 888 436 (SEALEY) <br> * Column 1, lines 25-50,66-68; column 2, lines 1-20,43 - column 4, line 7; figures 1-4 * <br> --- | 1 | |
| A,D | US-A-4 552 324 (L.C. HRUSCH) <br> * Column 1, lines 6-9,62-68; column 2, lines 1-29; column 4, lines 22-57; column 6, line 31 - column 7, line 48; figures 2,3,5-11 * <br> ----- | 1 | |
| | | | TECHNICAL FIELDS SEARCHED (Int. Cl.4) |
| | | | B 64 C <br> F 16 F |

The present search report has been drawn up for all claims

| Place of search | Date of completion of the search | Examiner |
|---|---|---|
| THE HAGUE | 11-08-1988 | ZERI A. |